# EUROPÄISCHE PATENTSCHRIFT

(11) **EP 1 307 690 B1**
(45) Veröffentlichungstag und Bekanntmachung des Hinweises auf die Patenterteilung: **04.10.2006**
(21) Anmeldenummer: 01960158.2
(22) Anmeldetag: 08.08.2001
(51) Int. Cl.: F22B 5/00, A47J 27/04, F22B 27/12

(54) **VERFAHREN UND VORRICHTUNG ZUM ERZEUGEN VON DAMPF, INSBESONDERE FÜR EIN GARGERÄT**
METHOD AND DEVICE FOR THE GENERATION OF STEAM, IN PARTICULAR FOR A COOKING DEVICE
PROCEDE ET DISPOSITIF DE PRODUCTION DE VAPEUR, EN PARTICULIER POUR UN APPAREIL DE CUISSON

(30) Priorität: 09.08.2000 DE 10038957
(43) Veröffentlichungstag der Anmeldung: 07.05.2003
(73) Patentinhaber: Rational AG, 86899 Landsberg a. Lech (DE)
(72) Erfinder: SCHREINER, Thomas, 86857 Hurlach (DE); KOHLSTRUNG, Peter, 86830 Kaufering (DE); MAAS, Bruno, 86916 Kaufering (DE); WIEDEMANN, Peter, 86836 Klosterlechfeld (DE); JUNKER, Elmar, 82110 Gemering (DE)
(74) Vertreter: Weber-Bruls, Dorothée
(86) Internationale Anmeldenummer: PCT/DE2001/003034
(87) Internationale Veröffentlichungsnummer: WO 2002/012790

(56) Entgegenhaltungen:
- CH-A- 687 040
- DE-C- 698 319
- FR-A- 880 494

## Beschreibung

Die Erfindung betrifft ein Verfahren zum Erzeugen von Dampf, insbesondere für ein Gargerät, bei dem eine Flüssigkeit innerhalb eines Dampferzeugungsbehälters durch Aufheizen von zumindest einer aufheizbaren Wandfläche des Dampferzeugungsbehälters zum Sieden gebracht, beim Aufheizen durch zumindest einen in dem Dampferzeugungsbehälter drehbar gelagerten ersten Rotor in Rotation versetzt sowie durch Fliehkräfte aufgrund der Rotation gegen die aufheizbare Wandfläche gedrückt wird, der durch ein Verdampfen zumindest eines Teils der Flüssigkeit entstehende Dampf aus dem Dampferzeugungsbehälter durch einen Dampfauslaß entweicht und mit dem Dampf mitgerissene Tropfen der Flüssigkeit abgeschieden werden; und eine Vorrichtung zum Erzeugen von Dampf, insbesondere für ein Gargerät, umfassend einen Dampferzeugungsbehälter, der über einen Zulauf zumindest teilweise mit einer Flüssigkeit füllbar ist und aus dem Dampf zu einem Dampfauslaß gelangen kann, eine Heizeinrichtung zum Aufheizen der Flüssigkeit in dem Dampferzeugungsbehälter und zumindest einen ersten Rotor in dem Dampferzeugungsbehälter, über den eine Flüssigkeit in dem Dampferzeugungsbehälter in Rotation versetzbar ist, zwecks Dampferzeugung in einem erfindungsgemäßen Verfahren.

Herkömmliche Dampfgeneratoren, wie sie insbesondere in Gargeräten zum Einsatz kommen, weisen meist einen Wasserkessel auf, der teilweise mit Wasser gefüllt ist, welches durch Heizkörper zum Sieden gebracht wird. Der Platzbedarf solch eines Dampfgenerators wird hauptsächlich durch zwei Faktoren bestimmt, nämlich zum einen durch den Volumenanteil, der mit flüssigem Wasser gefüllt ist, und zum anderen durch den Volumenanteil des über dem Wasser befindlichen Gasraums.

Der erste Volumenanteil wird dabei durch die Größe der Heizkörper und den zwischen den Heizkörpern zur Umspülung derselben und zum Abtransport von Dampfblasen benötigten Raum begrenzt. Die Größe der Heizkörper wiederum wird bei vorgegebener Heizleistung durch den Leidenfrost-Effekt bestimmt, gemäß dem beim Beheizen einer verdampfbaren Flüssigkeit eine bestimmte Oberflächenleistungsdichte eines Heizkörpers nicht überschritten werden kann, da sich sonst eine geschlossene Dampfschicht zwischen der Oberfläche des Heizkörpers und der Flüssigkeit bildet, die die Wärmeabgabe behindert. Schön demonstriert sich der Leidenfrost-Effekt in der Erscheinung, daß Wassertropfen auf einer glühenden Platte nicht unmittelbar verdampfen, sondern sich quasi tanzend bewegen, da sie sich, durch eine sich bildende Dampfschicht getragen, auf der Platte unregelmäßig bewegen.

Der zweite Volumenanteil wird benötigt, um Dampf von mitgeführten Wassertropfen zu trennen. Die Größe und Ausgestaltung des zweiten Volumenanteils, also des Gasraumes über der Flüssigkeit, sind entscheidend für die Dampfqualität. Die Dampfqualität wird insbesondere von der Größe der Wasseroberfläche, die vom Dampfstrom passiert werden muß, bestimmt. Denn je größer der Dampfstrom pro Wasseroberfläche ist, desto mehr Wasser wird vom austretenden Dampf mitgerissen.

Insgesamt ergibt sich aus obigen Überlegungen bei herkömmlichen Dampfgeneratoren somit ein großer Platzbedarf, wenn eine hohe Dampfqualität erzeugt werden soll. Zusätzlich ist aber auch darauf hinzuweisen, daß die Zeit, die benötigt wird, um einen bekannten, mit Wasser gefüllten Dampfgenerator betriebsbereit zu machen, auch von der eingefüllten Wassermenge abhängt, die nötig ist, um die Heizkörper sicher zu bedecken, was wiederum Anforderungen an die Größe des Dampfgenerators stellt.

Im Bereich von Kraftwerken, insbesondere Kernkraftwerken, sind Dampfgeneratoren bekannt, bei denen ein Rotationsfluß in einer einen Dampf erzeugende Flüssigkeit durch Einspritzen einer weiteren Flüssigkeit induziert wird. Die mit dem Rotationsfluß einhergehenden Fliehkräfte werden dabei zur Abscheidung von Verschmutzungen genutzt, wie in der US 4,972,804 bzw. DE 690 13 906 T2 beschrieben.

Ferner sind Dampfgeneratoren bekannt, bei denen der gesamte rohr- oder tonnenförmige Dampferzeugerbehälter in Rotation versetzt wird, was mit hohem Energie- und Kostenaufwand verbunden ist, und zudem eine hohe konstruktive Komplexität fordert, die eine drehende Lagerung des Dampferzeugerbehälters erforderlich macht, wodurch sich notgedrungen nur über die Achse eine Fluidzu- bzw. -abführung als praktikabel erweist. In der DT 2 214 566 wird zum Beispiel solch ein rotierender Dampferzeuger beschrieben, der zur Verdampfung von organischen Antriebsfluiden in einem geschlossenen Kreislauf eines Rankinemotors ausgelegt ist. Ähnlich arbeitet der aus der DE-PS 904 653 bekannte Dampferzeuger, der jedoch zusätzlich eine Regelung zur Flüssigkeits- einspeisung zwecks Einstellung eines Flüssigkeitsringes bestimmter Stärke aufweist.

In der DE 27 57 913 A1 ist ein rotierender Dampferzeuger mit einem drehbar gelagerten Kessel offenbart, der konstruktionell auf drehbare Durchführungen zur Einführung bzw. Entnahme eines fluiden Arbeitsmediums verzichtet.

Aus der DE 37 83 361 T2 ist ein Tandemabscheider für ein Dampf-Wasser-Gemisch bekannt, bei dem schraubenförmig gewundene Umlenkbleche das Dampf-Wasser-Gemisch in Rotation versetzen.

Die DE 692 07 830 T2 offenbart eine Dampferzeugeranordnung für Öfen, bei der in Rotation versetzte dünne Wasserstrahlen bzw. kleine Wassertröpfchen auf eine Heizeinrichtung fallen, um verdampft zu werden.

Aus der FR 880.494 ist ein Dampferzeuger unter Ausnutzung der Zentrifugalkraft auf den Verdampfungsvorgang mit einem oder mehreren hintereinander montierten Rädern bekannt, die auf einer gemeinsamen Welle sitzen. Der bekannte Dampferzeuger ist innerhalb einer Brennkammer angeordnet und besitzt zum Zwecke eines hohen Wärmeeintrages eine große Oberfläche. Die Drehung der Räder kann durch die Stoßwirkung des Dampfes sozusagen mit Eigenantrieb oder mit einem Fremdantrieb erfolgen.

Zur Verdampfung von Leitungswasser, insbesondere in einem Gargerät, arbeiten die bekannten Dampferzeuger jedoch nicht zufriedenstellend, sondern weisen den gravierenden Nachteil auf, daß sich die im Leitungswasser enthaltenen gelösten Mineralien, insbesondere Kalk, an den Wänden und Einbauten des Dampferzeugers ablagern. Dies kann zum Ausfall oder zur Beschädigung des Dampferzeugers führen, was in der Regel nur durch regelmäßige chemische Entkalkung verhindert werden kann. Die hierdurch verursachten, notwendigen, nachbetrieblichen Wartungsarbeiten sind wiederum kostenintensiv.

Aufgabe der vorliegenden Erfindung ist es daher, das gattungsgemäße Verfahren sowie die gattungsgemäße Vorrichtung zum Erzeugen von Dampf derart weiterzuentwickeln, daß die Nachteile des Stands der Technik überwunden werden, indem insbesondere kleine Dampfgeneratoren zur Abgabe von Dampf mit hoher Qualität bereitgestellt werden können, die zudem schnell betriebsbereit, kostengünstig, flexibel beheizbar und zuverlässig sind, ohne zu Siedeverzügen zu neigen und ohne regelmäßige Entkalkungen zu erfordern.

Die das Verfahren betreffende Aufgabe wird erfindungsgemäß dadurch gelöst, daß der erste Rotor zumindest während seiner Rotation zumindest bereichsweise schleifenden Kontakt aufweist oder gering beabstandet ist zur Wandfläche des Dampferzeugungsbehälters, um die Ablagerungen, insbesondere in Form von Verkalkungen, von der Wandfläche zumindest teilweise zu lösen.

In den Ansprüchen 2 bis 16 sind bevorzugte erfindungsgemäße Verfahren beschrieben.

Die die Vorrichtung betreffende Aufgabe der Erfindung wird dadurch gelöst, daß der erste Rotor eine Ablöseeinrichtung umfaßt, die während dessen Rotation zumindest bereichsweise von einer Wandfläche des Dampferzeugerbehälters Ablagerungen löst.

Die Ansprüche 18 bis 34 beschreiben bevorzugte erfindungsgemäße Vorrichtungen.

Dadurch, daß erfindungsgemäß erstmals der Schritt unternommen worden ist, anstelle des Dampferzeugungsbehälters dessen Einbauten zu drehen, wurden insbesondere folgende Vorteile erzielt:
i) Reduktion des Trägheitsmoments, wodurch gleichzeitig der Energiebedarf reduziert wird, Ansprechzeiten reduziert werden, Steuerzeiten reduziert werden, Lagerkräfte reduziert werden und Auswuchtungsprobleme reduziert werden; und
ii) Vereinfachung des Aufbaus, beispielsweise durch Vereinfachung der Installation und Kontaktierung einer Heizeinrichtung, sowie der Vermeidung konstruktiv aufwendiger Bauformen, wie sie bei rotierenden Außenbehältern üblich sind, um unter anderem drehbar ausgeführte Zuleitungen zu umgehen.

Somit werden insgesamt die Herstellungs- und Wartungskosten bei gleichzeitiger Steigerung der Nutzungszeit reduziert.

Weiterentwicklungen gemäß der Erfindung liegen zudem die überraschende Erkenntnis zugrunde, daß aufwendige und kostenintensive Wartungsarbeiten zur Entkalkung an Dampferzeugern überflüssig werden, sowie im Betrieb ein maximaler Wärmetransfer von den Wänden zur Flüssigkeit gewährleistet bleibt und nicht durch Kalkablagerung reduziert wird, indem die inneren rotierenden Einbauten sozusagen als Schleifeinrichtung fungieren, mit der Ablagerungen an den Wänden instantan während des Betriebes, das heißt der Rotation, abgetragen werden.

Weitere Merkmale und Vorteile der Erfindung ergeben sich aus der nachfolgenden Beschreibung, in der drei Ausführungsbeispiele der erfindungsgemäßen Vorrichtung anhand von schematischen Zeichnungen im Einzelnen erläutert sind. Dabei zeigt:
- Figur 1: eine Schnittansicht durch eine erste Ausführungsform mit ruhendem Rotor;
- Figur 2: eine Schnittansicht durch eine zweite Ausführungsform mit ruhendem Rotor; und
- Figur 3: eine Schnittansicht durch eine dritte Ausführungsform mit ruhendem Rotor.

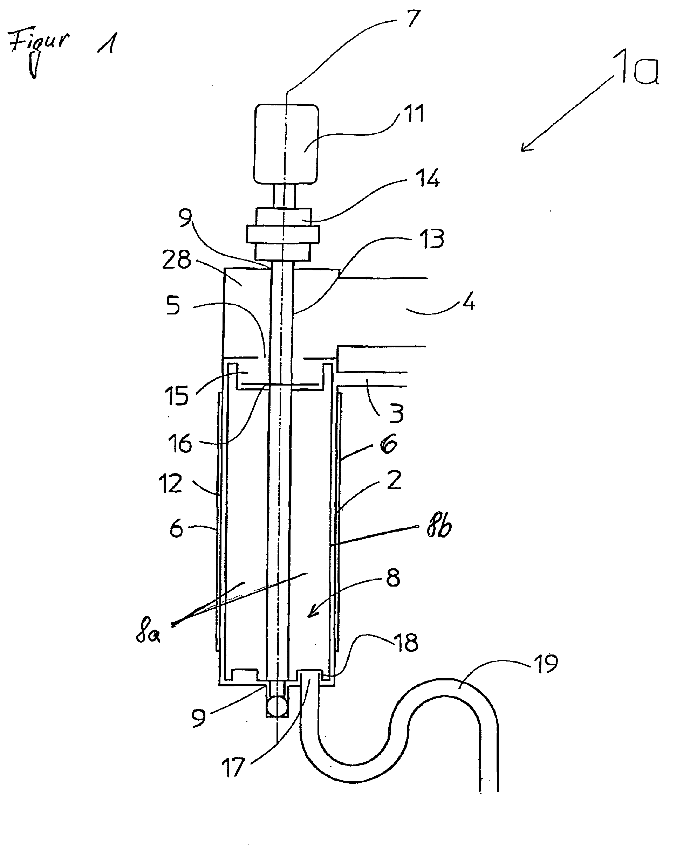

Wie Figur 1 zu entnehmen ist, umfaßt ein erfindungsgemäßer Dampferzeuger 1 a einen Dampferzeugungsbehälter in Form eines rohrförmigen Wasserkessels 2 mit einem Zulauf in Form eines Wasserzulaufes 3 und einem Dampfauslaß 4 an dem oberen Ende des Wasserkessels 2, eine Blende 5, die zur Kondensat- und Verunreinigungsabscheidung den Wasserkessel 2 vom Dampfauslaß 4 trennt, Heizelemente 6, in Form einer den rohrförmigen Wasserkessel 2 umgebenden Dickschichtheizung, und ein um eine Drehachse 7, die mit der Längsachse des Wasserkessels 2 zusammenfällt, drehbares Paddel 8, das durch zwei Lager 9 gelagert und mit einem Motor 11 über eine Kupplung 14, die Justierungsfehler ausgleichen soll, und eine Welle 13 antreibbar ist. Das Paddel 8 weist zwei Paddelhälften 8a jeweils mit Paddellängsseiten 8b benachbart zur Wandfläche 12 des Wasserkessels 2, im Bereich der Blende 5 eine Aussparung 15 sowie eine Prallscheibe 16, um vor der Blende 5 einen Potentialwirbel zu erzeugen, auf. Am unteren Ende des Wasserkessels 2 befindet sich ein Abwasserauslaß 17, der einen Kragen 18 besitzt, um Wasserverluste durch Strömung in einer Grenzschicht zu vermeiden. Der Abwasserauslaß 17 ist nur durch einen Siphon 19 verschlossen, um Dampfverluste zu vermeiden, so daß sich der Wasserkessel 2 bei Stillstand des Paddels 8 selbständig entleert.

Bei dem mit Bezug auf Figur 1 beschriebenen Dampferzeuger 1a wird Wasser über den Wasserzulauf 3 dem Wasserkessel 2 zugeführt und über das sich um die Drehachse 7 drehende Paddel 8 in Rotation versetzt, um gegen die über die Heizelemente 6 aufgeheizte Wandfläche 12 des Wasserkessels 2 gezwungen zu werden, was zu einer schnellen und gleichmäßigen Aufheizung des Wassers führt. Zugleich werden die im Stillstand durch Federn (nicht dargestellt) in ihrer in Figur 1 dargestellten Ruheposition gehaltenen Paddelhälften 8a, an deren Längsseiten 8b sich feine flexible Lippen (nicht dargestellt) befinden, durch die Rotation gegen die Wandfläche 12 des Wasserkessels 2 gedrückt. Der Anpreßdruck ist dabei so dimensioniert, daß die Lippen nur leicht über die Wandfläche 12 schleifen. Hierdurch werden Salzablagerungen, insbesondere Kalkverkrustungen, vermieden. Ferner können die Längsseiten 8b Verstärkungen aufweisen, um eine möglichst langanhaltende Ablösewirkung bei geringer Abnutzung zu erzielen, bzw. bei flexibler Ausgestaltung des Rotors der Ablöseeinrichtung die Enden der verwendeten elastischen Lippen verstärkt sein, um den Anpressdruck während der Rotation an die Wandfläche 12 zu erhöhen. Zudem werden über die Blende 5 sowohl Verschmutzungen des Wassers als auch mit dem erzeugten Dampf mitgerissene Wassertropfen, die aufgrund der Rotation des Paddels 8 gegen die Wandfläche 12 des rohrförmigen Wasserkessels 2 gezwungen werden, davon abgehalten, mit dem Dampf aus dem Dampfauslaß 4 herauszutreten.

Die Geometrie am Blendendurchgang kann dabei zur Erhöhung der Trennungsrate von Dampf und Flüssigkeit so ausgestaltet sein, daß ein Potentialwirbel induziert wird, der durch die vorgeschaltete Prallscheibe 16 verstärkt werden kann.

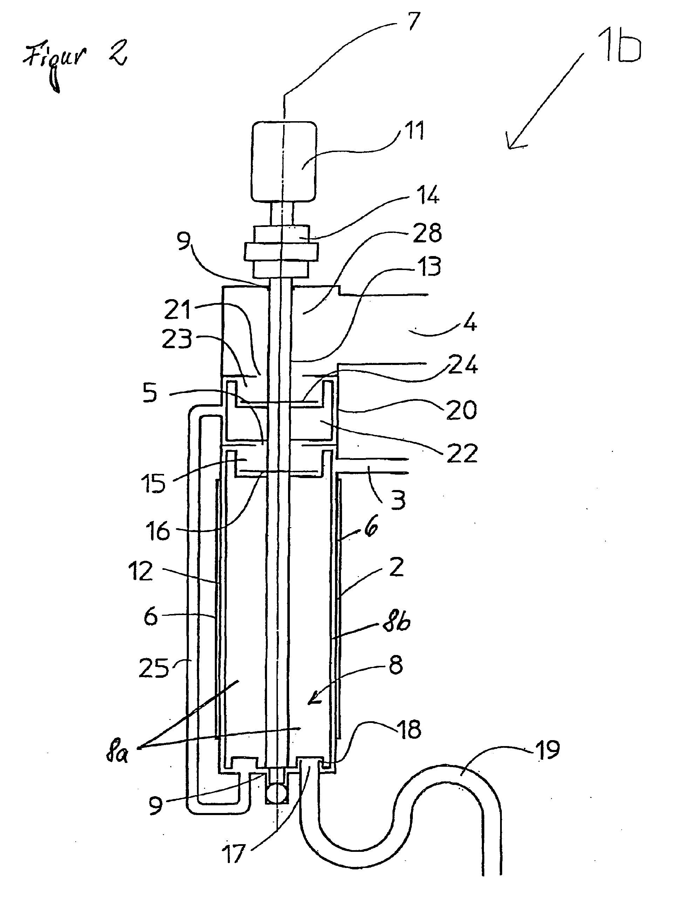

Bei geringem Durchmesser des Wasserkessels 2 kann es trotz der genannten Gegenmaßnahmen durch hohe Strömungsgeschwindigkeiten zur Mitnahme von Wassertröpfchen kommen. Bei der in Figur 2 beschriebenen Ausführungsform des erfindungsgemäßen Dampferzeugers 1b ist dem Wasserkessel 2 daher eine Wasserabscheidekammer 20 nachgeschaltet, die mitgenommenes Wasser wieder abscheidet und von einer zweiten Blende 21 begrenzt wird. In dieser Wasserabscheidekammer 20 dreht sich ein zweites Paddel 22, das von der selben Welle 13 angetrieben wird wie das Paddel 8 und das ebenfalls eine Aussparung 23 und eine Prallscheibe 24 besitzt, um einen Potentialwirbel zu erzeugen. Die aufgrund der durch das Paddel 22 erzeugten Rotation abgeschiedenen Wassertröpfchen werden über eine Wasserrückführung 25 in Form einer Rohr- oder Schlauchleitung wieder in den Wasserkessel 2 zurückgeführt. Alle anderen Komponenten des erfindungsgemäßen Dampferzeugers 1b gemäß Figur 2 entsprechen dem erfindungsgemäßen Dampferzeuger 1a gemäß Figur 1.

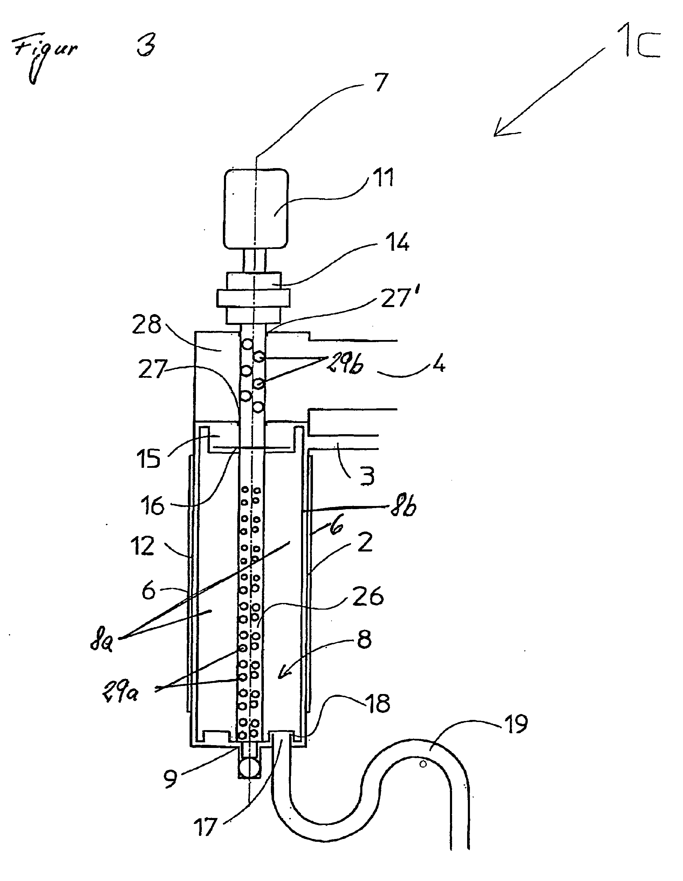

In Figur 3 ist ein weiterer erfindungsgemäßer Dampferzeuger 1c dargestellt, in dem zusätzliche Maßnahmen implementiert sind, um die Wassermitnahme bei geringem Kesseldurchmesser zu reduzieren, wobei identische Komponenten mit identischen Bezugszeichen versehen sind. Das Paddel 8 wird hier von einer Hohlwelle 26 angetrieben, die gleichzeitig dazu dient, den erzeugten Dampf aus dem Wasserkessel 2 zu leiten. Um den Dampf in das Innere der Hohlwelle 26 zu bewegen, muß diese im Verdampferraum, also dem Wasserkessel 2, über die gesamte benetzte Länge mit radialen Bohrungen 29a oder Schlitzen versehen sein, deren Durchmesser oder Dichte in axialer Richtung so variiert ist, daß der strömungsbedingte Druckabfall in der Hohlwelle 26 kompensiert und somit die Strömungskomponente in Richtung der Drehachse 7 im Wasserkessel 2 außerhalb der Hohlwelle 26 sowie gleichzeitig die Wassermitnahme minimiert wird. Außerhalb des Wasserkessels 2 kann der Dampf z. B. durch weitere radiale Bohrungen 29b in der Hohlwelle 26 oder durch eine axiale Öffnung (nicht dargestellt) am Ende der Welle 26 wieder ausgekoppelt werden.

Am unteren Ende des Wasserkessels 2 ist die Welle 26 gelagert, wobei sie sich zu einer entsprechend dünneren Vollwelle verjüngen kann. Am oberen Ende des Wasserkessels 2 ist die Hohlwelle 26 durch eine Dichtung oder dampfdichte Lagerung 27 aus dem Wasserkessel 2 in eine darüber liegende Dampfauslaßkammer 28 geführt. In dieser Dampfauslaßkammer 28 oberhalb des Wasserkessels 2 besitzt die Hohlwelle 26 die Bohrungen 29b, um den erzeugten Dampf wieder austreten zu lassen und dem Dampfauslaß 4 zuzuführen. Die Hohlwelle 26 wird am anderen Ende der Dampfauslaßkammer 28 wieder mit einer Dichtung oder dampfdichten Lagerung 27' herausgeführt, wobei die Hohlwelle 26 in oder oberhalb der Dampfauslaßkammer 28 in eine dünnere Vollwelle übergehen kann. Oberhalb der Dampfauslaßkammer 28 ist die Hohlwelle 26 an den Motor 11 über eine Kupplung 14 zum Ausgleichen von Ausrichtungsfehlern zwischen der Motorachse und der Hohlwelle 26 angekoppelt.

Zusätzlich kann der Füllstand des Dampferzeugers 1a, 1b oder 1c durch Messung eines fliehkraftinduzierten Druckes an der Außenwandung des Wasserkessels 2 erfaßt werden.

Eine Entkalkung eines erfindungsgemäßen Dampferzeugers 1a, 1b oder 1c wird durch die flexiblen Lippen an den Paddellängsseiten 8b der Paddelhälften 8a, die die Ablagerungen im Betrieb kontinuierlich von der Außenwand abtragen, bewirkt. Die Lippen selbst nutzen sich dabei nicht wesentlich ab, da sie im Bereich des Eintauchens in den Wasserfilm selbst verkalken und so überwiegend Kalk auf Kalk schabt. Am Paddel 8 kann sich aber auch nicht übermäßig viel Kalk ansammeln, da dieser durch die Fliehkraft nach außen getrieben und dort schließlich abgeschabt wird. Das entstehende Kalkmehl muß nur regelmäßig durch Spülen bzw. Wasserwechseln aus dem Wasserkessel entfernt werden. Die Verwendung von flexiblen Lippen als Ablöseeinrichtung oder die flexible Ausgestaltung des Rotors ansich birgt den Vorteil, daß durch eventuell vorhandene Ablagerungen kein Anhaften des Rotors mit der Wandfläche 12 im Ruhezustand erfolgen kann, da die Fliehkraft bei Rotation den Kontakt des Rotors oder der Ablöseeinrichtung zur Wandfläche 12 herstellt. Um eine selbsttätige Entleerung zu ermöglichen, kann das untere Ende des Wasserkessels 2, mit einer weiteren Blende oder einem Verschlußmechanismus (nicht dargestellt) versehen werden. Dabei kann die Blende 5 stromaufwärts des Dampfauslasses 4 mit eben solch einer Blende kombiniert werden.

Die in der voranstehenden Beschreibung, in den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1a, 1b, 1c: Dampferzeuger
- 2: Wasserkessel
- 3: Wasserzulauf
- 4: Dampfauslaß
- 5: Blende
- 6: Heizelement
- 7: Drehachse
- 8: Paddel
- 8a: Paddelhälfte
- 8b: Paddellängsseite
- 9: Lager
- 11: Motor
- 12: Wandfläche
- 13: Welle
- 14: Kupplung
- 15: Aussparung
- 16: Prallscheibe
- 17: Abwasserablauf
- 18: Kragen
- 19: Siphon
- 20: Wasserabscheidekammer
- 21: Blende
- 22: Paddel
- 23: Aussparung
- 24: Prallscheibe
- 25: Wasserrückführung
- 26: Hohlwelle
- 27, 27': dampfdichte Lagerung
- 28: Dampfauslaßkammer
- 29a, 29b: Bohrungen

## Patentansprüche

1. Verfahren zum Erzeugen von Dampf, insbesondere für ein Gargerät, bei dem eine Flüssigkeit innerhalb eines Dampferzeugungsbehälters durch Aufheizen von zumindest einer aufheizbaren Wandfläche des Dampferzeugungsbehälters zum Sieden gebracht, beim Aufheizen durch zumindest einen in dem Dampferzeugungsbehälter drehbar gelagerten ersten Rotor in Rotation versetzt sowie durch Fliehkräfte aufgrund der Rotation gegen die aufheizbare Wandfläche gedrückt wird, der durch ein Verdampfen zumindest eines Teils der Flüssigkeit entstehende Dampf aus dem Dampferzeugungsbehälter durch einen Dampfauslaß entweicht und mit dem Dampf mitgerissene Tropfen der Flüssigkeit abgeschieden werden, **dadurch gekennzeichnet, daß** der erste Rotor zumindest während seiner Rotation zumindest bereichsweise schleifenden Kontakt aufweist oder gering beabstandet ist zur Wandfläche des Dampferzeugungsbehälters, um die Ablagerungen, insbesondere in Form von Verkalkungen, von der Wandfläche zumindest teilweise zu lösen.

2. Verfahren nach Anspruch 1, **dadurch gekennzeichnet, daß** die Fliehkräfte der Flüssigkeit und/oder des Dampfes größer als die Gravitationskräfte der Flüssigkeit und/oder des Dampfes sind.

3. Verfahren nach Anspruch 1 oder 2, **dadurch gekennzeichnet, daß** im Bereich der Abscheidung der Tropfen der Flüssigkeit die Flüssigkeit und der Dampf zumindest teilweise gegen zumindest eine Blende gezwungen werden, Potentialwirbel in der Flüssigkeit und/oder dem Dampf zumindest teilweise erzeugt werden und/oder keine Aufheizung der aufheizbaren Wand des Behälters stattfindet.

4. Verfahren nach Anspruch 1 oder 2, **dadurch gekennzeichnet, daß** Verunreinigungen der Flüssigkeit beseitigt werden, indem die Flüssigkeit gegen zumindest eine Blende gezwungen wird.

5. Verfahren nach einem der vorangehenden Ansprüche, **dadurch gekennzeichnet, daß** die Flüssigkeit mit einer Mindestgeschwindigkeit in den Behälter eingespeist wird, vorzugsweise auf die aufheizbare Wandfläche und/oder den ersten Rotor gerichtet.

6. Verfahren nach einem der vorangehenden Ansprüche, **dadurch gekennzeichnet, daß** der Füllstand des Behälters durch Messen eines fliehkraftinduzierten Druckes auf mindestens eine Wandfläche des Behälters, vorzugsweise von außerhalb des Behälters, bestimmt wird.

7. Verfahren nach einem der vorangehenden Ansprüche, **dadurch gekennzeichnet, daß** in dem aus dem Dampferzeugungsbehälter entweichenden Dampf kondensierte und/oder unverdampfte Flüssigkeit in mindestens einem dem Dampferzeugungsbehälter nachgeschalteten weiteren Flüssigkeitsabscheidungsbehälter durch einen zweiten Rotor in Rotation versetzt wird, und Kondensat abgeschieden sowie aus dem Flüssigkeitsabscheidungsbehälter abgeleitet wird, vorzugsweise dem Dampferzeugungsbehälter zurückgeliefert wird.

8. Verfahren nach Anspruch 7, **dadurch gekennzeichnet, daß** der erste Rotor im Dampferzeugungsbehälter und der zweite Rotor im Flüssigkeitsabscheidungsbehälter über einen Motor, vorzugsweise über die gleiche Drehachse, in Rotation versetzt werden.

9. Verfahren nach einem der vorangehenden Ansprüche, **dadurch gekennzeichnet, daß** der Dampf zumindest teilweise durch ein im Dampferzeugungsbehälter angeordnetes Rohr, vorzugsweise in Form einer mit dem bzw. den Rotor(en) in Verbindung stehenden Hohlwelle, dem Dampfauslaß zugeführt wird.

10. Verfahren nach einem der Ansprüche 7 bis 9, **dadurch gekennzeichnet, daß** der zweite Rotor zumindest während seiner Rotation zumindest bereichsweise schleifenden Kontakt zur Wandfläche oder Ablagerungen auf der Wandfläche des Flüssigkeitsabscheidungsbehälters aufweist und die Ablagerungen, insbesondere in Form von Verkalkungen, von der Wandfläche zumindest teilweise löst.

11. Verfahren nach einem der Ansprüche 7 bis 10, **dadurch gekennzeichnet, daß** der Abstand zwischen dem zweiten Rotor und der dazugehörigen Wandfläche so gering bemaßt ist, daß eine sich bildende Ablagerung, insbesondere eine Verkalkung, bei Rotation des zweiten Rotors abgetragen wird.

12. Verfahren nach einem der vorangehenden Ansprüche, **dadurch gekennzeichnet, daß** der erste und/oder zweite Rotor im Ruhezustand keinen Kontakt zur entsprechenden Wandfläche aufweist bzw. aufweisen und aufgrund von Fliehkräften bei einer Rotation zumindest bereichsweise in Richtung der entsprechenden Wandfläche gedrückt wird bzw. werden.

13. Verfahren nach einem der vorangehenden Ansprüche, **dadurch gekennzeichnet, daß** die Wandfläche und/oder der Rotor nach einer Betriebsphase und/oder einer Benetzung mit Flüssigkeit bei rotierendem und/oder ruhendem Rotor trockengeheizt wird bzw. werden, wobei ein Anhaften des Rotors an der Wandfläche durch Ablagerungen vermieden wird.

14. Verfahren nach einem der vorangehenden Ansprüche, **dadurch gekennzeichnet, daß** sich der Dampferzeugungsbehälter im Ruhezustand des ersten Rotors, vorzugsweise selbständig, entleert, insbesondere über einen dampfdichten Abwasserablauf.

15. Verfahren nach einem der vorangehenden Ansprüche, **dadurch gekennzeichnet, daß** der Zulauf aus einem flexiblen Werkstoff hergestellt und durch den Druck der zufließenden Flüssigkeit verformt wird, um Ablagerungen im Zulauf zumindest teilweise zu lösen.

16. Verfahren nach einem der vorangehenden Ansprüche, **dadurch gekennzeichnet, daß** der Zulauf durch einen Flüssigkeitsstrom gekühlt wird, der über eine Steuer- und/oder Regeleinrichtung kontinuierlich aufrecht erhalten wird, wobei die Flüssigkeit einem Reservoir und/oder einer Speiseleitung entnommen wird und Ablagerungen zumindest bereichsweise verhindert werden.

17. Vorrichtung zum Erzeugen von Dampf, insbesondere für ein Gargerät, umfassend einen Dampferzeugungsbehälter (2), der über einen Zulauf (3) zumindest teilweise mit einer Flüssigkeit füllbar ist und aus dem Dampf zu einem Dampfauslaß (4) gelangen kann, eine Heizeinrichtung (6) zum Aufheizen der Flüssigkeit in dem Dampferzeugungsbehälter (2) und zumindest einen ersten Rotor (8) in dem Dampferzeugungsbehälter (2), über den eine Flüssigkeit in dem Dampferzeugungsbehälter (2) in Rotation versetzbar ist, zwecks Dampferzeugung in einem Verfahren nach einem der vorangehenden Ansprüche, **dadurch gekennzeichnet, daß** der erste Rotor (8) eine Ablöseeinrichtung umfaßt, die während dessen Rotation zumindest bereichsweise von einer Wandfläche (12) des Dampferzeugerbehälters (2) Ablagerungen löst.

18. Vorrichtung nach Anspruch 17, **dadurch gekennzeichnet, daß** der Behälter (2) zwei sich gegenüberliegende Enden aufweist, wobei der Zulauf (3) und der Dampfauslaß (4) entweder beide an einem Ende oder jeder an einem anderen Ende angeordnet sind.

19. Vorrichtung nach Anspruch 17 oder 18, **dadurch gekennzeichnet, daß** der Dampferzeugungsbehälter (2) um eine Achse rotationssymmetrisch, vorzugsweise im wesentlichen rohrförmig oder sich vom Zulauf (3) zum Dampfauslaß (4) hin konisch erweiternd, ist.

20. Vorrichtung nach Anspruch 19, **dadurch gekennzeichnet, daß** die Achse des Dampferzeugungsbehälters (2) mit der Rotationsachse (7) des ersten Rotors (8) zusammenfällt, wobei vorzugsweise die Rotationsachse (7) im wesentlichen parallel zur Richtung der Gravitationskraft verläuft.

21. Vorrichtung nach einem der Ansprüche 17 bis 20, **dadurch gekennzeichnet, daß** die Heizeinrichtung (6) mit elektrischen Heizwendeln, einer Gasverbrennung, einem Wärmetauscher, elektrischer Induktion, Wärmestrahlung, direkter oder indirekter Flammenbeaufschlagung, Dickschichtheizung oder einer elektrisch leitenden Keramik als Material der aufheizbaren Wandfläche (12) des Dampferzeugungsbehälters (2) arbeitet, wobei die äußere Oberfläche des Dampferzeugungsbehälters (2), vorzugsweise durch Rippen, Prägungen und/oder Spiralen, vergrößert ist und/oder die Strömungsgeschwindigkeit des Verbrennungsgases erhöht ist.

22. Vorrichtung nach einem der Ansprüche 17 bis 21, **gekennzeichnet durch** zumindest eine Blende (5) zum Abscheiden von mit dem Dampf mitgerissenen Tropfen der Flüssigkeit und/oder Verschmutzungen in der Flüssigkeit.

23. Vorrichtung nach Anspruch 22, **dadurch gekennzeichnet, daß** eine erste Blende (5) stromabwärts des Zulaufes (3) und/oder eine zweite Blende (21) stromaufwärts des Auslasses (4) angeordnet ist bzw. sind.

24. Vorrichtung nach einem der Ansprüche 17 bis 23, **gekennzeichnet durch** eine Öffnung (17), zur vorzugsweise selbsttätigen, Entleerung der Flüssigkeit bei Stillstand des Rotors (8).

25. Vorrichtung nach Anspruch 23 oder 24, **gekennzeichnet durch** eine dritte Blende im Bereich des Dampferzeugungsbehälters (2) mit geringstem Gravitationspotential, wobei die Öffnung (17) während der Rotation **durch** einen Verschlußmechanismus, vorzugsweise umfassend ein Syphon (19), verschlossen ist.

26. Vorrichtung nach einem der Ansprüche 17 bis 25, **dadurch gekennzeichnet, daß** der erste Rotor (8) über eine Welle (13) von einem Motor (11) antreibbar ist, wobei die Welle (13) insbesondere eine Hohlwelle mit radialen Bohrungen (29a, 29b) und/oder Schlitzen ist, die entlang der Längsseite der Hohlwelle angeordnet sind, um einen Dampftransfer von dem Dampferzeugungsbehälter (2) zu dem Dampfauslaß (4) zu ermöglichen.

27. Vorrichtung nach einem der Ansprüche 17 bis 26, **gekennzeichnet durch** einen Flüssigkeitsabscheidungsbehälter (20) zwischen dem Dampferzeugungsbehälter (2) und dem Dampfauslaß (4), wobei vorzugsweise von dem Flüssigkeitsabscheidungsbehälter (20) eine Flüssigkeitsrückführung (25) zu dem Dampferzeugungsbehälter (2) verläuft.

28. Vorrichtung nach Anspruch 27, **dadurch gekennzeichnet, daß** in dem Flüssigkeitsabscheidungsbehälter (20) ein zweiter Rotor (22) drehbar ist, der vorzugsweise mechanisch mit dem ersten Rotor (8) gekoppelt ist.

29. Vorrichtung nach Anspruch 28, **dadurch gekennzeichnet, daß** der zweite Rotor (22) eine Ablöseeinrichtung umfaßt, die während der Rotation zumindest bereichsweise von einer Wandfläche (12) des Flüssigkeitsabscheidungsbehälters (20) Ablagerungen löst.

30. Vorrichtung nach einem der vorangehenden Ansprüche 17 bis 29, **dadurch gekennzeichnet, daß**
die Ablöseeinrichtung Bürsten, Lamellen, Fransen und/oder Lippen, vorzugsweise aus lebensmittelechtem, hitzebeständigem Material, umfaßt.

31. Vorrichtung nach einem der Ansprüche 17 bis 30, **dadurch gekennzeichnet, daß** die Ablöseeinrichtung an ihrer bei Rotation zur Wandfläche (12) nächstgelegenen Seite mindestens bereichsweise eine Materialverstärkung aufweist.

32. Vorrichtung nach einem der Ansprüche 17 bis 31, **dadurch gekennzeichnet, daß** die Ablöseeinrichtung im ruhenden Zustand keinen Kontakt zu den Wandflächen aufweist, jedoch bei Rotation, vorzugsweise über den Einsatz zumindest einer Federung.

33. Vorrichtung nach einem der Ansprüche 17 bis 32, **dadurch gekennzeichnet, daß** der erste und/oder zweite Rotor (8, 22) in Form eines Paddels, vorzugsweise mit zwei Paddelhälften (8b), spiralförmig, schraubenförmig und/oder sternförmig ausgebildet ist bzw. sind.

34. Vorrichtung nach einem der vorangehenden Ansprüche 17 bis 28, **dadurch gekennzeichnet, daß**
der Rotor selbst flexibel, vorzugsweise in Form von Bürsten, Lamellen, Fransen und/oder Lippen ausgeführt ist und in ruhendem Zustand keinen Kontakt zur Wand aufweist.

## Claims

1. Method for the generation of steam, in particular for a cooking appliance, in which a liquid is brought to the boil within a steam generation vessel by heating at least one heatable wall surface of the steam generation vessel, is set in rotation during the heating by at least one first rotor mounted rotatably in the steam generation vessel and is pressed onto the heatable wall surface by centrifugal forces resulting from the rotation, the steam which is formed through evaporation of at least some of the liquid escapes from the steam generation vessel through a steam outlet, and drops of the liquid entrained with the steam are separated off, **characterized in that** the first rotor, at least while it is rotating, is at least in regions in stripping contact with or at a short distance from the wall surface of the steam generation vessel, in order for the deposits, in particular in the form of limescale, to be at least partially removed from the wall surface.

2. Method according to Claim 1, **characterized in that** the centrifugal forces of the liquid and/or the steam are greater than the gravitational forces of the liquid and/or the steam.

3. Method according to Claim 1 or 2, **characterized in that** in the region where the drops of the liquid are separated off, the liquid and steam are at least partially forced onto at least one diaphragm, potential turbulence is at least partially generated in the liquid and/or the steam and/or no heating of the heatable wall of the vessel takes place.

4. Method according to Claim 1 or 2, **characterized in that** impurities in the liquid are eliminated by the liquid being forced onto at least one diaphragm.

5. Method according to one of the preceding claims, **characterized in that** the liquid is fed into the vessel at a minimum velocity, preferably directed onto the heatable wall surface and/or the first rotor.

6. Method according to one of the preceding claims, **characterized in that** the filling level of the vessel is determined by measuring a centrifugally induced pressure on at least one wall surface of the vessel, preferably from outside the vessel.

7. Method according to one of the preceding claims,
**characterized in that** unevaporated liquid and/or liquid which is condensed in the steam escaping from the steam generation vessel is set in rotation by a second rotor in at least one further liquid separation vessel connected downstream of the steam generation vessel, and condensate is separated out and discharged from the liquid separation vessel, preferably by being fed back to the steam generation vessel.

8. Method according to Claim 7, **characterized in that** the first rotor in the steam generation vessel and the second rotor in the liquid separation vessel are set in rotation by a motor, preferably via the same rotation shaft.

9. Method according to one of the preceding claims, **characterized in that** the steam is at least partially fed to the steam outlet through a tube arranged in the steam generation vessel, preferably in the form of a hollow shaft which is connected to the rotor(s).

10. Method according to one of Claims 7 to 9,
**characterized in that** the second rotor, at least while it is rotating, at least in regions is in stripping contact with the wall surface or deposits on the wall surface of the liquid separation vessel and at least partially remove the deposits, in particular in the form of limescale, from the wall surface.

11. Method according to one of Claims 7 to 10,
**characterized in that** the distance between the second rotor and the associated wall surface is dimensioned to be so small that any deposits which are formed, in particular limescale, are removed when the second rotor rotates.

12. Method according to one of the preceding claims,
**characterized in that** the first and/or second rotor, in the at-rest state, is/are not in contact with the corresponding wall surface and is/are pressed towards the corresponding wall surface at least in regions as a result of centrifugal forces during rotation.

13. Method according to one of the preceding claims,
**characterized in that** the wall surface and/or the rotor, after an operating phase and/or wetting with liquid, is/are dry-heated with the rotor stationary or rotating, with sticking of the rotor to the wall surface as a result of deposits being avoided.

14. Method according to one of the preceding claims,
**characterized in that** in the at-rest state of the first rotor the steam generation vessel is emptied, preferably automatically, in particular via a steam-tight waste water outlet.

15. Method according to one of the preceding claims, **characterized in that** the inlet is produced from a flexible material and is deformed by the pressure of the liquid flowing in, in order for deposits in the inlet to be at least partially removed.

16. Method according to one of the preceding claims,
**characterized in that** the inlet is cooled by a liquid stream which is maintained continuously by means of a control device, the liquid being removed from a reservoir and/or a feedline and deposits being prevented at least in regions.

17. Apparatus for the generation of steam, in particular for a cooking appliance, comprising a steam generation vessel (2), which can be at least partially filled with a liquid via an inlet (3) and from which steam can pass to a steam outlet (4), a heating device (6) for heating the liquid in the steam generation vessel (2) and at least a first rotor (8) in the steam generation vessel (2), by means of which a liquid in the steam generation vessel (2) can be set in rotation, for the purpose of generating steam in a method according to one of the preceding claims, **characterized in that** the first rotor (8) comprises a removal device which, while the rotor is rotating, at least in regions removes deposits from a wall surface (12) of the steam generator vessel (2).

18. Apparatus according to Claim 17, **characterized in that** the vessel (2) has two opposite ends, the inlet (3) and the steam outlet (4) either both being arranged at one end or each being arranged at different ends.

19. Apparatus according to Claim 17 or 18, **characterized in that** the steam generation vessel (2) is rotationally symmetrical about an axis, and is preferably substantially tubular or widens conically from the inlet (3) towards the steam outlet (4).

20. Apparatus according to Claim 19, **characterized in that** the axis of the steam generation vessel (2) coincides with the axis of rotation (7) of the first rotor (8), the axis of rotation (7) preferably running substantially parallel to the direction of the force of gravity.

21. Apparatus according to one of Claims 17 to 20, **characterized in that** the heating device (6) operates using electrical heating coils, gas combustion, a heat exchanger, electrical induction, thermal radiation, direct or indirect application of a flame, thick-film heating or an electrically conducting ceramic as material of the heatable wall surface (12) of the steam generation vessel (2), the outer surface of the steam generation vessel (2) preferably being increased in size by fins, stamp formations and/or spirals, and/or the flow velocity of the combustion gas being increased.

22. Apparatus according to one of Claims 17 to 21, **characterized by** at least one diaphragm (5) for separating off.drops of the liquid entrained with the steam and/or contaminating constituents in the liquid.

23. Apparatus according to Claim 22, **characterized by** the provision of a first diaphragm (5) downstream of the inlet (3) and/or a second diaphragm (21) upstream of the outlet (4).

24. Apparatus according to one of Claims 17 to 23, **characterized by** an opening (17) for, preferably automatically, emptying the liquid when the rotor (8) is stationary.

25. Apparatus according to Claim 23 or 24, **characterized by** a third diaphragm in the region of the steam generation vessel (2) with an extremely low gravitational potential, the opening (17) being closed during rotation by a closure mechanism, preferably comprising a siphon (19).

26. Apparatus according to one of Claims 17 to 25, **characterized in that** the first rotor (8) can be driven via a shaft (13) of a motor (11), the shaft (13) in particular being a hollow shaft with radial bores (29a, 29b) and/or slots, which are arranged along the longitudinal side of the hollow shaft, in order to allow steam to be transferred from the steam generation vessel (2) to the steam outlet (4).

27. Apparatus according to one of Claims 17 to 26, **characterized by** a liquid separation vessel (20) between the steam generation vessel (2) and the steam outlet (4), with a liquid return (25) preferably running from the liquid separation vessel (20) to the steam generation vessel (2).

28. Apparatus according to Claim 27, **characterized in that** a second rotor (22), which is preferably mechanically coupled to the first rotor (8), can rotate inside the liquid separation vessel (20).

29. Apparatus according to Claim 28, **characterized in that** the second rotor (22) comprises a removal device which, during rotation, at least in regions removes deposits from a wall surface (12) of the liquid separation vessel (20).

30. Apparatus according to one of the preceding Claims 17 to 29, **characterized in that** the removal device comprises brushes, lamellae, fringes and/or lips, preferably made from food-standard, heat-resistant material.

31. Apparatus according to one of Claims 17 to 30,
**characterized in that** the removal device, on its side which is closest to the wall surface (12) during rotation, at least in regions has a material reinforcement.

32. Apparatus according to one of Claims 17 to 31, **characterized in that** the removal device, in the at-rest position, is not in contact with the wall surfaces, but during rotation, preferably through the use of at least one spring means.

33. Apparatus according to one of Claims 17 to 32, **characterized in that** the first and/or second rotor (8, 22) is/are designed in the form of a paddle, preferably with two paddle halves (8b), in the shape of a spiral, screw and/or star.

34. Apparatus according to one of the preceding Claims 17 to 28, **characterized in that** the rotor itself is configured to be flexible, preferably in the form of brushes, lamellae, fringes and/or lips, and in the at-rest state is not in contact with the wall.

## Revendications

1. Procédé de production de vapeur, en particulier pour un appareil de cuisson, dans lequel un liquide, se trouvant à l'intérieur d'un récipient de génération de vapeur, est porté à ébullition par chauffage d'au moins une surface de paroi chauffable d'un récipient de génération de vapeur, lors du chauffage est mis en rotation à l'aide d'au moins un premier rotor, monté en rotation dans le récipient de génération de vapeur, et est refoulé contre la surface de paroi chauffable, par les efforts centrifuges venant de la rotation, la vapeur, produite par évaporation d'au moins une partie du liquide, est laissée échapper du récipient de génération de vapeur en passant par un échappement de vapeur et les gouttelettes de liquide, entraînées avec la vapeur, sont séparées, **caractérisé en ce que** le premier rotor, au moins pendant sa rotation, présente, au moins par zones, un contact frotteur ou est légèrement espacé de la face de paroi du récipient de génération de vapeur, afin de détacher, au moins partiellement, de la surface des parois, les dépôts, en particulier se présentant sous la forme d'entartrages.

2. Procédé selon la revendication 1, **caractérisé en ce que** les efforts centrifuges du liquide et/ou de la vapeur sont supérieurs aux efforts de gravitation du liquide et/ou de la vapeur.

3. Procédé selon la revendication 1 ou 2, **caractérisé en ce que**, dans la zone de séparation des gouttes du liquide, le liquide et la vapeur sont contraints, au moins partiellement, à frapper au moins un écran, un tourbillonnement potentiel étant produit au moins partiellement dans le liquide et/ou la vapeur, et/ou aucun chauffage de la paroi chauffable du récipient ne se produisant.

4. Procédé selon la revendication 1 ou 2, **caractérisé en ce que** des impuretés du liquide sont éliminées, **en ce que** les liquides est contraint à frapper au moins un écran.

5. Procédé selon l'une des revendications précédentes, **caractérisé en ce que** le liquide est injecté dans le récipient à une vitesse minimale, de préférence est dirigé sur la surface de paroi chauffable et/ou le premier rotor.

6. Procédé selon l'une des revendications précédentes, **caractérisé en ce que** le niveau de remplissage du récipient est déterminé par mesure d'une pression induite par la force centrifuge, sur au moins une surface de paroi du récipient, de préférence depuis l'extérieur du récipient.

7. Procédé selon l'une des revendications précédentes, **caractérisé en ce que** du liquide condensé et/ou non évaporé, se trouvant dans la vapeur s'échappant du récipient de génération de vapeur, est mis en rotation au moyen d'un deuxième rotor, en au moins un autre récipient de séparation de liquide, branché en aval du premier récipient de génération de vapeur, et le condensat est séparé et, ainsi qu'évacué du récipient de séparation de liquide, de préférence est retourné au récipient de génération de vapeur.

8. Procédé selon la revendication 7, **caractérisé en ce que** le premier rotor, dans le récipient de génération de vapeur, et le deuxième rotor, dans le récipient de séparation de liquide, sont mis en rotation, de préférence sur le même axe de rotation, par l'intermédiaire d'un moteur.

9. Procédé selon l'une des revendications précédentes, **caractérisé en ce que** la vapeur est amenée à l'échappement de vapeur au moins partiellement, au moyen d'un tube disposé dans le récipient de génération de vapeur, de préférence ayant la forme d'un arbre creux, relié au ou aux rotor(s).

10. Procédé selon l'une des revendications 7 à 9,
**caractérisé en ce que** le deuxième rotor, au moins pendant sa rotation, présente, au moins par zones, un contact frotteur par rapport à la surface de paroi, ou par rapport à des dépôts situés sur la surface de paroi du récipient de séparation de liquide, et les dépôts, en particulier se présentant sous la forme de tartres, sont détachés au moins partiellement de la surface de paroi.

11. Procédé selon l'une des revendications 7 à 10,
**caractérisé en ce que** l'espacement, entre le deuxième rotor et la surface de paroi afférente, est dimensionné à une faible valeur, de manière qu'un dépôt se formant, en particulier un entartrage, soit arraché lors de la rotation du deuxième rotor.

12. Procédé selon l'une des revendications précédentes, **caractérisé en ce que** le premier et/ou le deuxième rotor, à l'état de repos, n'a ou n'ont aucun contact avec la surface de paroi correspondante, et/ou sont refoulé(s), au moins par zones, dans la direction de la surface de paroi correspondant du fait des efforts centrifuges se produisant lors d'une rotation.

13. Procédé selon l'une des revendications précédentes, **caractérisé en ce que** la surface de paroi et/ou le rotor, après une phase de fonctionnement et/ou à un mouillage avec du liquide, lorsque le rotor tourne et/ou est au repos est/sont chauffés à sec, sachant que toute adhésion du rotor à la surface de paroi par des dépôts est évitée.

14. Procédé selon l'une des revendications précédentes, **caractérisé en ce que** le récipient de génération de vapeur, lorsque le premier rotor est à l'état de repos, est vidé, de préférence automatiquement, en particulier par une évacuation d'eau étanche à la vapeur.

15. Procédé selon l'une des revendications précédentes, **caractérisé en ce que** l'alimentation est fabriquée à partir d'un matériau flexible et est déformée, du fait de la pression du liquide amené, afin de détacher au moins partiellement les dépôts situés dans l'alimentation.

16. Procédé selon l'une des revendications précédentes, **caractérisé en ce que** l'alimentation est refroidie par un écoulement de liquide, qui est conservé de façon continue par un dispositif de commande et/ou de régulation, sachant que le liquide est prélevé d'un réservoir et/ou d'une conduite d'alimentation, et que des dépôts sont empêchés, au moins par zones.

17. Dispositif de production de vapeur, en particulier pour un appareil de cuisson, comprenant un récipient de génération de vapeur (2), susceptible d'être rempli, au moins partiellement, avec un liquide par une alimentation (3), et d'où de la vapeur peut être amenée à un échappement de vapeur (4), un dispositif de chauffage (6) pour chauffer le liquide présent dans le récipient de génération de vapeur (2), et au moins un premier rotor (8) dans le récipient de génération de vapeur (2), et par lequel un liquide, présent dans le récipient de génération de vapeur (2), peut être mis en rotation dans un but de génération de vapeur, dans un procédé selon l'une des revendications précédentes,
**caractérisé en ce que** le premier rotor (8) comprend un dispositif de décollement, qui, pendant sa rotation, détache, au moins par zones, des dépôts vis-à-vis d'une surface de paroi (12) du récipient de génération de vapeur (2).

18. Dispositif selon la revendication 17, **caractérisé en ce que** le récipient (2) présente deux extrémités opposées, l'alimentation (3) et l'échappement de vapeur (4) étant disposés, soit tous deux sur une extrémité, soit chacun sur une autre extrémité.

19. Dispositif selon la revendication 17 ou 18, **caractérisé en ce que** le récipient de génération de vapeur (2) est réalisé selon une symétrie de rotation par rapport à un axe, de préférence à une forme sensiblement tubulaire, ou va en s'élargissant de façon conique, de l'alimentation (3) à l'échappement (4).

20. Dispositif selon la revendication 19, **caractérisé en ce que** l'axe du récipient de génération de vapeur (2) coïncide avec l'axe de rotation (7) du premier rotor (8), sachant que, de préférence, l'axe de rotation (7) s'étend sensiblement parallèlement à la direction de la force de ravitaillement.

21. Dispositif selon l'une des revendications 17 à 20, **caractérisé en ce que** le dispositif de chauffage (6) travaille avec des enroulements chauffant électriques, une combustion à gaz, un échangeur de chaleur, une induction électrique, un rayonnement thermique, une sollicitation directe ou indirecte par une flamme, un chauffage en couche épaisse ou une céramique conductrice de la chaleur, en tant que matériau de la surface de paroi (12) chauffable du récipient de génération de vapeur (2), sachant que la surface extérieure du récipient de génération de vapeur (2) est agrandie, de préférence par des nervures, des reliefs tridimensionnels et/ou des spirales, et/ou que la vitesse d'écoulement du gaz de combustion est augmentée.

22. Dispositif selon l'une des revendications 17 à 21, **caractérisé en ce que**, par au moins un écran (7), servant à la séparation des gouttes de liquide entraînées avec la vapeur et/ou des souillures présentes dans le liquide.

23. Dispositif selon la revendication 22, **caractérisé en ce qu'**un premier écran (5) est disposé en aval de l'alimentation (3) et/ou un deuxième écran (21) est disposé en amont de l'échappement (4).

24. Dispositif selon l'une des revendications 17 à 23, **caractérisé par** une ouverture (17) pour le vidage, de préférence automatique, du liquide lorsque le rotor (8) est à l'arrêt.

25. Dispositif selon la revendication 23 ou 24, **caractérisé par** un troisième écran dans la zone du récipient de génération de vapeur (2), avec un potentiel de gravitation minimal, l'ouverture (17) étant fermée pendant la rotation, au moyen d'un mécanisme d'obturation, de préférence comprenant un siphon (19).

26. Dispositif selon l'une des revendications 17 à 25, **caractérisé en ce que** le premier rotor (8) est susceptible d'être entraîné par un moteur (11), par l'intermédiaire d'un arbre (13), l'arbre (13), en particulier un arbre creux, étant muni de perçage radiaux (29a, 29b) et/ou de fentes, disposé(e)s le long du côté longitudinal de l'arbre creux, pour permettre un transfert de vapeur du récipient de génération de vapeur (2)à l'échappement de vapeur (4).

27. Dispositif selon l'une des revendications 17 à 26, **caractérisé par** un récipient de séparation de liquide (20), entre le récipient de génération de vapeur (2) et l'échappement de vapeur (4), sachant que, de préférence, un recyclage de liquide (25) vers le récipient de génération de vapeur (2) s'étend depuis le récipient de séparation de liquide (20).

28. Dispositif selon la revendication 27, **caractérisé en ce que**, dans le récipient de séparation de liquide (20), est monté à rotation un deuxième rotor (22), couplé de préférence mécaniquement au premier rotor (8).

29. Dispositif selon la revendication 28, **caractérisé en ce que** le deuxième rotor (22) comprend un dispositif de décollement, qui, pendant la rotation, détache, au moins par zones, des dépôts, vis-à-vis d'une surface de paroi (12) du récipient de séparation de liquide (20).

30. Dispositif selon l'une des revendications 17 à 29 précédentes, **caractérisé en ce que** le dispositif de décollement comprend des brosses, des lamelles, des franges et/ou des lèvres, de préférence en matériau convenant aux produits alimentaires, résistant à la chaleur.

31. Dispositif selon l'une des revendications 17 à 30, **caractérisé en ce que** le dispositif de décollement présente, sur sa face la plus proche de la surface de paroi (12) lors de la rotation, au moins par zones, un renforcement de matériau.

32. Dispositif selon l'une des revendication 17 à 31, **caractérisé en ce que** le dispositif de décollement, à l'état de repos, ne présente aucun contact avec les surfaces de paroi, alors que, pendant la rotation, il en était établi un, de préférence par utilisation d'au moins un montage élastique.

33. Dispositif selon l'une des revendications 17 à 32, **caractérisé en ce que** le premier et/ou le deuxième rotor (8, 22) est/sont réalisé(s) sous la forme d'une pale, de préférence ayant deux demi-pales (8b), en forme de spirale, en forme hélicoïdale et/ou en forme d'étoile.

34. Dispositif selon l'une des revendications 17 à 28 précédentes, **caractérisé en ce que** le rotor lui-même est flexible, de préférence présente la forme de brosses, de lamelles, de franges et/ou de lèvres, et ne présente aucun contact avec la paroi à l'état de repos.
